Europäisches Patentamt

European Patent Office

Office européen des brevets

(11) Veröffentlichungsnummer: **0 155 399**

**A2**

(12) # EUROPÄISCHE PATENTANMELDUNG

(21) Anmeldenummer: **84115954.4**

(22) Anmeldetag: **20.12.84**

(51) Int. Cl.⁴: **G 06 F 1/00**

(30) Priorität: **18.01.84 US 571771**

(43) Veröffentlichungstag der Anmeldung:
**25.09.85 Patentblatt 85/39**

(84) Benannte Vertragsstaaten:
**AT CH DE FR GB IT LI NL**

(71) Anmelder: **Siemens Aktiengesellschaft**
**Berlin und München Wittelsbacherplatz 2**
**D-8000 München 2(DE)**

(72) Erfinder: **Chiu, Ming-Yee**
**78 Boothby Drive**
**Mt. Laurel NJ 08054(US)**

(54) Schutzanordnung zur Verhinderung der unerlaubten Ausführung eines Programms.

(57) Ein auf einem Chip integrierter Mikroprozessor enthält eine Schutzschaltung, die den unberechtigten Lauf eines Programms verhindert. Die Schutzschaltung besteht aus einer Decoderschaltung (18), die eine Entschlüsselungsstufe enthält, mit der verschlüsselte Befehlscodes entschlüsselt werden. Am Ausgang der Decoderschaltung (18) ist eine Warteschlangenschaltung (22) angeordnet, die die entschlüsselten Befehlscodes speichert und sukzessive an die Verarbeitungseinheiten des Mikroprozessors weitergibt. Die Befehlscodes des Programms sind in einer bestimmten Weise verschlüsselt, so daß Programm nur von einem ganz bestimmten Mikroprozessor ausgeführt werden kann, der den zugeordneten Schlüssel für die Entschlüsselung besitzt.

EP 0 155 399 A2

./...

Croydon Printing Company Ltd.

FIG. 1

Siemens Aktiengesellschaft       Unser Zeichen
Berlin und München               VPA 84 P 7402 E 55399
                        _ 1 _

Die Erfindung bezieht sich auf eine Schutzanordnung zur
Verhinderung der unerlaubten Ausführung eines Programms bei
einem als integrierter Schaltkreis realisierten Mikroprozessor.


Die unberechtigte Verwertung von Software ist ein ungelöstes Problem für die Entwickler der Software seit der
Mikroprozessor auf dem Markt erschienen ist. Viele Verfahren sind untersucht worden und benutzt worden, um die
unberechtigte Verwertung der Software zu verhindern; diese Verfahren sind für die normale kommerzielle Verwendung entweder zu kompliziert oder sie sind zu einfach zu
umgehen. Ein Verfahren besteht z.B. darin, einen Verschlüsselungsalgorithmus zu verwenden- z.B. von DES-Verfahren (Data Encryption Standard) oder vom Verschlüsselungsverfahren mit öffentlichem Schlüssel (Public Key
Cryptography)- der entweder einen geheimen oder einen
öffentlich verfügbaren "Schlüssel" benutzt, um das Programm zu verschlüsseln und zu entschlüsseln. Solche Verfahren erfordern einen verhältnismäßig großen Rechneraufwand, um den verschlüsselten Code wieder zu entschlüsseln. Deshalb besteht ein großer Bedarf an einem einfachen Verfahren, mit dem Software geschützt werden kann
und das trotzdem sehr sicher ist.


Ein anderes Verfahren, das zum Schutz der Software vorgeschlagen worden ist, besteht darin, die Festspeicher (ROMs)
zu schützen, die den Programmcode (z.B. die Maschinenbefehle) enthalten. Jedoch ist es einfach, mit Hilfe eines
Analysegerätes, das eine Mikroprozessorsonde enthält, all
die Befehle zu überprüfen, die einem Mikroprozessor zugeführt werden. Obwohl die in dieser Weise festgestellten
Befehle dem Programmfluß folgen, ist es dennoch möglich,

Il 1 The - 17.12.1984

den Programmcode zu erhalten. Ein anderer Nachteil des
auf Festwertspeicher beruhenden Schutzes besteht darin, daß mit ihm kein Schutz für Programme möglich ist,
die auf einem Floppy-Disc oder einem anderen Massenspeicher gespeichert sind.

Die der Erfindung zugrundeliegende Aufgabe besteht darin, eine verhältnismäßig einfache Schutzanordnung zur
Verhinderung der unerlaubten Verwertung eines Programms
anzugeben, bei der das Programm in einem Festspeicher,
einem Floppy-Disc oder einem anderen Massenspeicher gespeichert sein kann.

Diese Aufgabe wird bei einer Schutzanordnung der eingangs
angegebenen Art dadurch gelöst, daß eine Funktionseinheit
zur Ausführung der Befehle mit ersten Eingängen im Mikroprozessor vorgesehen ist, daß im Mikroprozessor eine Warteschlangenschaltung zur Speicherung des Codes der auszuführenden Befehle vorgesehen ist, die zur Übergabe des Codes der auszuführenden Befehle mit
den ersten Eingängen der Funktionseinheit verbunden ist und
daß eine Decoderschaltung zur Entschlüsselung von verschlüsselten Codes vorgesehen ist, die vor der
Warteschlangenschaltung angeordnet ist.

Zur Vermeidung von unberechtigter Verwertung eines Programms wird gemäß der vorliegenden Erfindung der
Code der Maschinenbefehle verschlüsselt. Mit Hilfe einer
Decoderschaltung, die im integrierten Schaltkreis zusammen mit dem Mikroprozessor enthalten ist, wird der Befehlscode vor der Ausführung der Befehle durch den Mikroprozessor
wieder entschlüsselt.

Der Mikroprozessor nach der Erfindung muß deshalb speziell
von dem integrierten Schaltkreishersteller gefertigt sein.
Allerdings benötigt der Mikroprozessor entsprechend der Erfindung nur einige geringfügige Zusätze zu der herkömmlichen Mikroprozessorarchitektur auf dem Chip.

Der Mikroprozessor ist vorzugsweise so aufgebaut, daß er auch die Ausführung nicht verschlüsselter Programme ermöglicht. Dann ist er zu 100% kompatibel mit dem Mikroprozessor, von dem er abgeleitet worden ist.

Ein mit der Decoderschaltung versehener Mikroprozessor entschlüsselt das Programm, das vorher verschlüsselt worden ist, um vor unberechtigter Verwertung zu schützen. Um sicherzustellen, daß die verschlüsselte Software nur auf dem Mikroprozessor laufen kann, der dazu berechtigt ist, muß die Decoderschaltung eines jeden Mikroprozessors einzigartig sein. Diese Einzigartigkeit der Decoderschaltung wird dadurch erreicht, daß der Mikroprozessor mit einer programmierbaren Decoderschaltung hergestellt wird. Dann kann entweder der Hersteller des integrierten Schaltkreises oder der Käufer des Mikroprozessors in die Decoderschaltung einen Schlüssel einfügen, so daß nur das Programm, das mit diesem Schlüssel verschlüsselt worden ist, entschlüsselt werden kann.

In der Praxis wird der Hersteller integrierter Schaltkreise nur verantwortlich sein für das Einfügen der programmierbaren Decoderschaltung in den Mikroprozessorchip. Danach wird der OEM Systementwickler den Schlüssel in die Decoderschaltung des Mikroprozessors einbrennen. Auf diese Weise wird jeder Mikroprozessor einzigartig, so daß der Systementwickler die Beziehung zwischen der Seriennummer des Mikroprozessors und dem Schlüssel registrieren muß.

Der Systementwickler kann dann Programme entwickeln und diese in einer einzigartigen Weise durch Verwendung verschiedener Schlüssel für jedes System, das er baut, verschlüsseln. Der Systementwickler kann dann sowohl seine Systeme als auch seine verschlüsselten Programme Benutzern verkaufen, ohne daß er diesen Benutzern die
den einzelnen Systemen zugeordneten Schlüssel mitteilen müßte.

Eine vorteilhafte Ausführung der erfindungsgemäßen
Schutzschaltung besteht darin, daß die Decoderschaltung sowohl eine Schaltung zur Entschlüsselung des Befehlscodes wie auch eine Umgehungsschaltung für diese
Schaltung enthält. Soll ein verschlüsseltes Programm
bearbeitet werden, wird der entsprechende Befehlscode
über die Schaltungsanordnung zur Entschlüsselung geleitet, soll dagegen ein nicht verschlüsseltes Programm
verarbeitet werden, dann wird der Befehlscode um die
Schaltungsanordnung zur Entschlüsselung herumgeführt.

Wenn ein Softwarehaus ein Mikroprozessorsystem von einem
OEM Hersteller erhält und für seine Kunden Software entwickelt, kann das Softwarehaus die eigenen Programme unter
Verwendung der Umgehungsschaltung laufen lassen. Nachdem
das Programm ausgetestet ist und in den Maschinencode
überführt worden ist, kann das Softwarehaus dieses Programm zum Verkauf seinen Kunden anbieten. Wenn ein Verkauf getätigt worden ist, muß sich das Softwarehaus die
Seriennummer des Mikroprozessors, den der Kunde hat, verschaffen und muß dann den Schlüssel für diesen Mikroprozessor vom Chiphersteller oder OEM System Hersteller erwerben. Das Softwarehaus kann dann das Programm mit dem
Schlüssel verschlüsseln und die verschlüsselte Software
seinen Kunden verkaufen. Die Programme, die verschiedenen
Kunden verkauft werden, sind darum mit verschiedenen Schlüsseln verschlüsselt, so daß ein gegebenes Programm nur auf
dem Mikroprozessor laufen kann, für den es bestimmt ist.

Andere Weiterbildungen der Erfindung ergeben sich aus
den Unteransprüchen.

Anhand von Ausführungsbeispielen, die in den Figuren
dargestellt sind, wird die Erfindung weiter erläutert.
Es zeigen

Fig. 1 ein Blockschaltbild eines Intel 80286 Mikroprozessors, der entsprechend einer Ausführungsform der Erfindung geändert worden ist,

Fig. 2 ein Blockschaltbild eines Decoderschaltungsteils und des Warteschlangenschaltungsteils des Mikroprozessors nach Fig. 1,

Fig. 3 ein Blockschaltbild einer weiteren Ausführung
der Decoderschaltung und der Warteschlangenschaltung
nach der Erfindung,

Fig. 4 ein Blockschaltbild einer besonderen Decoderschaltung, die in den Ausführungsbeispielen der Fig. 2
und 3 verwendbar ist,

Fig. 5 eine schematische Darstellung einer Decoderschaltung nach Fig. 4.

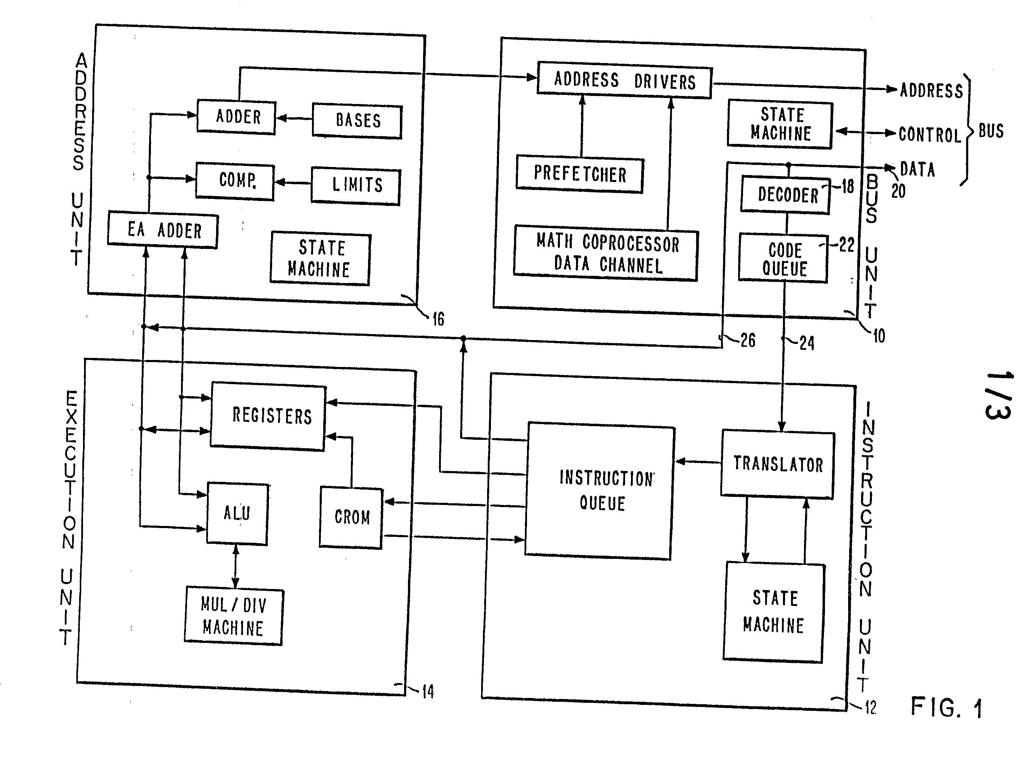

Fig. 1 zeigt ein Blockschaltbild der internen Architektur eines Intel 80286 Mikroprozessors, der entsprechend der Erfindung geändert worden ist, um Schutz für
die von diesem Mikroprozessor ausgeführte Software zu erhalten. Obwohl ein bestimmter und bekannter Mikroprozessor
in der Fig. dargestellt ist, ist es selbstverständlich,
daß ähnliche Änderungen auch bei anderen Mikroprozessoren
gemacht werden können, um Software gegen unberechtigte
Verwertung zu schützen.

Der Mikroprozessor nach Fig. 1 enthält eine Buseinheit 10,
eine Befehlseinheit 12, eine Recheneinheit 14 und eine
Adresseneinheit 16. Der Aufbau und die Funktion dieser
verschiedenen Funktionseinheiten ist geläufig und allgemein bekannt mit Ausnahme der Änderung in der Buseinheit 10.
Die Änderung der Buseinheit 10 besteht darin, daß eine Decoderschaltung 18 hinzugefügt wird, die zwischen einem
externen Datenbus 20 und einer Warteschlangenschaltung 22 angeordnet ist. Die Warteschlangenschaltung 22
erhält und speichert den Befehlscode und führt nacheinander den Befehlscode der verschiedenen Befehle über Leitungen 24 der Befehlseinheit 12 zu. Die Befehle, die durch
diese Befehlscode festgelegt werden, werden dann durch die
Befehlseinheit 12 in Verbindung mit der Recheneinheit 14
und der Adresseneinheit 16 ausgeführt. Die Befehle werden
von einem Speicher über den Datenbus 20 geholt und über
die Decoderschaltung 18 der Warteschlangenschaltung 22 zugeführt. Diese Decoderschaltung ist entweder hardwaremäßig
oder durch ein Programm so eingestellt, daß sie die Befehlscode entschlüsselt, die früher in einer diesem bestimmten Mikroprozessor zugeordneten Art und Weise verschlüsselt worden sind. Vorteilhafterweise ist die Decoderschaltung programmierbar. Der Schlüssel oder die Schlüssel
zur Entschlüsselung des Programms werden in die Decoderschaltung 18 programmiert und dazu benutzt, um die Befehle
zu entschlüsseln. Zum Beispiel kann der Schlüssel oder die
Schlüssel in einem EPROM gespeichert sein, der in die Decoderschaltung integriert ist. Auf diese Weise muß der
Mikroprozessorhersteller nur einen einzigen Typ von Mikroprozessoren produzieren, der später entsprechend dem individuellen Benutzer eingestellt wird.

Nach der Herstellung des Mikroprozessors kann der Benutzer des Mikroprozessors verschiedene Schlüssel in
jeden Mikroprozessor programmieren, so daß nur eine bestimmte verschlüsselte Software auf diesem bestimmten
Mikroprozessor ausgeführt werden kann. In anderen Worten,
wenn ein Schlüssel oder mehrere Schlüssel in den Mikroprozessor eingeschrieben worden sind, ist dieser Mikroprozessor einzigartig. Deshalb wird ein verschlüsseltes
Programm, das auf einem Mikroprozessor laufen kann, nicht
auf einem anderen Mikroprozessor des gleichen Typs ablaufen können, der mit einem verschiedenen Schlüssel versehen ist.

Nach Fig. 1 werden die Daten, die dem Mikroprozessor
zugeführt werden sollen oder die vom Mikroprozessor erzeugt werden, einem Bus 26 im Mikroprozessor zugeleitet.
Der Bus 26 ist mit dem externen Datenbus 20 über einen
Ein- und Ausgangsschaltkreis verbunden. Dabei muß daraufhingewiesen werden, daß die Decoderschaltung 18 nur
die Befehle entschlüsselt, die in der Befehlswarteschlange
enthalten sind. Nicht entschlüsselt werden dagegen die
Daten, die in den Mikroprozessor hineinlaufen oder vom
Mikroprozessor abgegeben werden.

Wie weiter unten noch ausführlich beschrieben wird, enthält die Decoderschaltung 18 ein oder mehrere Register,
die nur beschrieben werden können und die einen oder
mehrere Schlüssel für die Entschlüsselung des Befehlscodes
speichern. Diese Befehle können in diese Register einprogrammiert werden, aber die Befehle können aus den Registern nicht herausgelesen werden, wenn sie einmal gespeichert sind, so daß die Identität der Schlüssel geheim bleibt. Der Benutzer des Mikroprozessors kann deshalb
den Schlüssel oder die Schlüssel aus dem Mikroprozessor
nicht entnehmen.

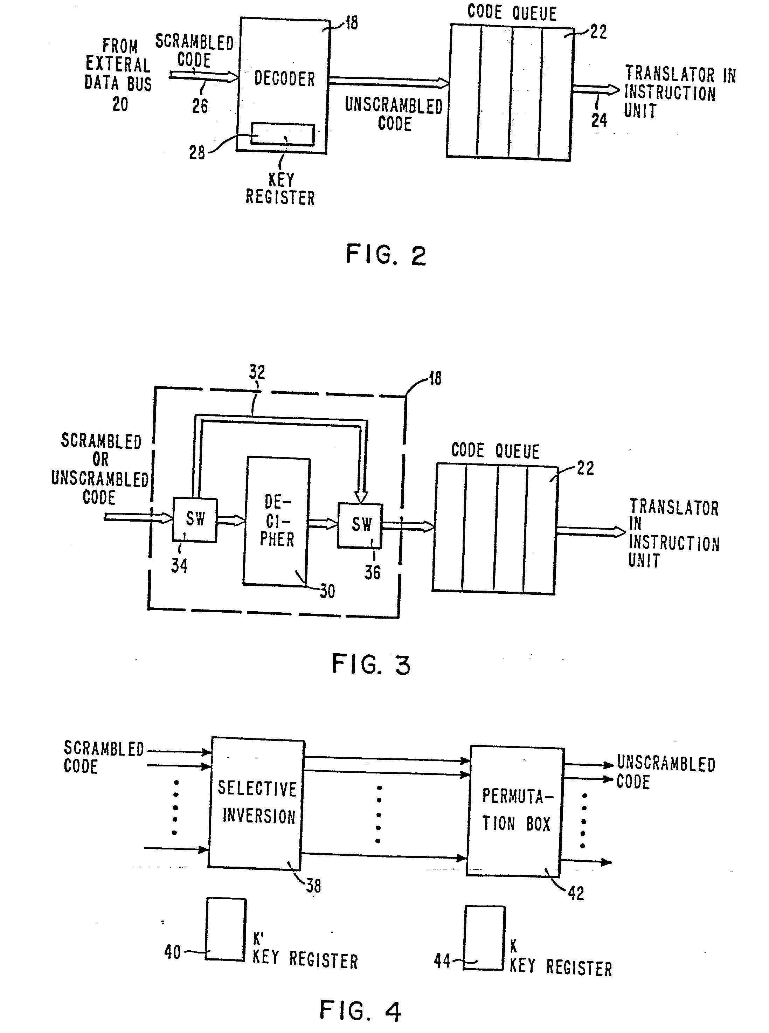

Fig. 2 zeigt, wie die Decoderschaltung arbeitet. Verschlüsselte Befehlscode werden der Decoderschaltung 18 über den
externen Datenbus 20 und über den internen Datenbus 26 zugeführt. Die Decoderschaltung 18 entschlüsselt jeden aufeinanderfolgenden Befehlscode, wobei sie den in dem nur beschreibbaren Schlüsselregister 28 enthaltenden Schlüssel
verwendet. Der entschlüsselte Code wird dann zu der Warteschlangeschaltung 22 übertragen, die einen Rückstau von Befehlscode für die Befehlseinheit 12 bereithält.

Fig. 3 zeigt, wie die Decoderschaltung 18 modifiziert werden kann, so daß der Mikroprozessor normale, nicht verschlüsselte Befehlscode sowie verschlüsselte Code verarbei-

0155399

ten kann. Die Decoderschaltung 18 enthält eine Entschlüsselungseinheit 30, die den verschlüsselten Code in einen unverschlüsselten Code übersetzt, eine Umgehungsleitung 32 und Schalter 34 und 36. Die Decoderschaltung 18 arbeitet in einem von zwei Betriebsarten: In der Entschlüsselungsbetriebsart werden die verschlüsselten Befehlscode durch den Schalter 34 zur Entschlüsselungseinheit 30 geführt und der entschlüsselte Code wird von der Entschlüsselungseinheit 30 durch den Schalter 36 zur Warteschlangenschaltung 22 geführt. In der zweiten Betriebsart werden die nicht verschlüsselten Befehlsworte von dem externen Datenbus 20 um die Entschlüsselungseinheit 30 über den Schalter 34, die Umgehungsleitungen 32 und den Schalter 36 herumgeführt. In dieser Betriebsart arbeitet das System wie ein konventioneller Mikroprozessor.

Die Entschlüsselungseinheit 30 in der Decoderschaltung 18 kann nach irgendeinem bekannten Entschlüsselungsverfahren arbeiten. Im allgemeinen müssen die Befehlscodes zuerst verschlüsselt werden, und zwar entweder durch Hardware mit einer Verschlüsselungsschaltung oder mit einem Computer, der entsprechende Software verwendet. Mahtematisch kann dies folgendermaßen geschrieben werden:

(Verschlüsselter Code) = $E_k$ (Nichtverschlüsselter Code), wobei k = Schlüssel.

Es gibt einen entsprechenden Entschlüsselungsprozeß, der mit $E_k^{-1}$ bezeichnet wird, der den verschlüsselten Code in den nicht verschlüsselten Code in einer eins zu eins Entsprechung zurückverwandelt:

(Nichtverschlüsselter Code) = $E_k^{-1}$ (Verschlüsselter Code).

Es ist die Aufgabe der Entschlüsselungseinheit 30, die Funktion $E_k^{-1}$ auszuführen.

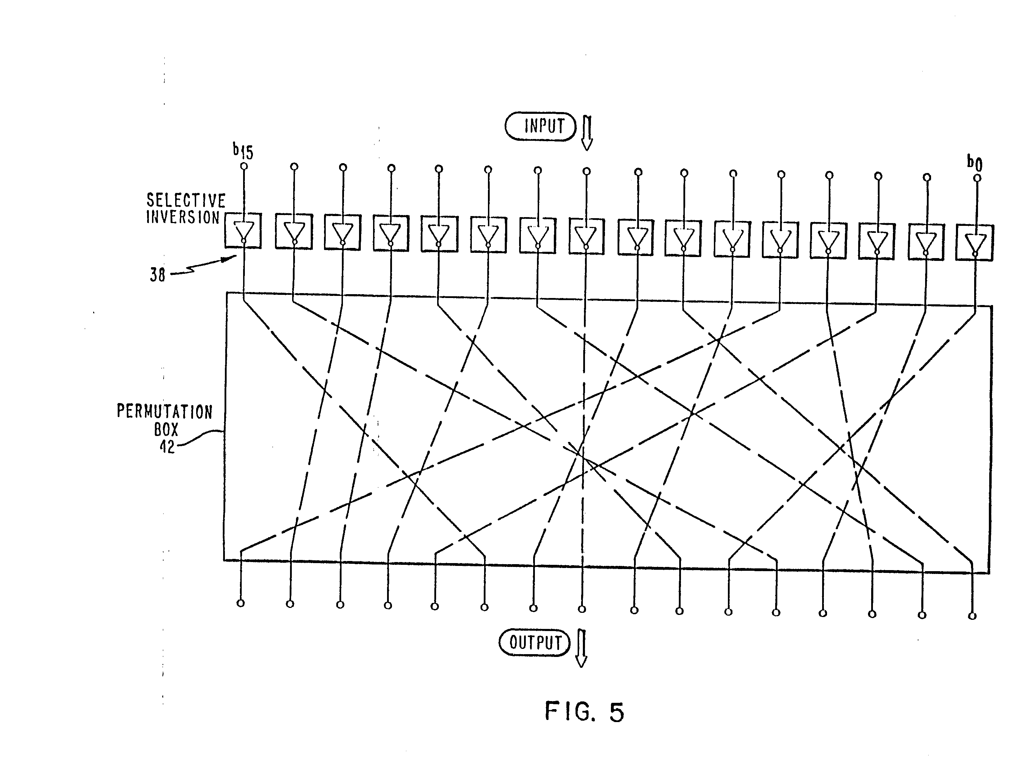

Fig. 4 und Fig. 5 zeigen ein einfaches Beispiel einer solchen Entschlüsselungseinheit.

Nach Fig. 4 umfaßt die Entschlüsselungseinheit zwei verschiedene Stufen: eine getrennte Inversionsstufe 38, die ein erstes Schlüsselregister 40 für den Schlüssel k' enthält und eine Permutationsschaltung 42, die ein zweites Schlüsselregister 44 für einen zweiten Schlüssel k hat. Die Inversionsstufe 38 und die Permutationsschaltung 42 sind in Fig. 5 für einen 16 bit Befehlscode ausführlicher dargestellt.

Die Inversionsstufe invertiert das i-te bit $b_i$, wenn das i-te bit des ersten Schlüssels k' eine eins ist: Im anderen Fall läßt die Stufe den Befehlscode unverändert hindurch. In einem Beispiel, das in Fig. 5 dargestellt ist, ist der erste Schlüssel k' gleich 1001000111111001.

Die Permutationsschaltung 42 permutiert die Leitungen, die von der Inversionsstufe kommen entsprechend dem zweiten Schlüssel k. Diese Permutation der Leitungen wird durch die gestrichelten Linien innerhalb der Schaltung 42 der Fig. 5 gezeigt.

Wenn die selektive Inversion und die Permutation mit $S_k$ und $P_k$ benannt werden, dann gilt:
$$E_k^{-1} = P_k\, S_{k'}$$

Für das Verschlüsselungsverfahren gilt:
$$E_k = (E_k^{-1})^{-1} = (P_k\, S_{k'})^{-1} = S_{k'}^{-1} P_k^{-1}$$

Da gilt
$$S_{k'}^{-1} = S_{k'} \quad \text{und} \quad P_k^{-1} = P_k.$$

Ist
$$E_k = S_{k'} P_k$$

Um den Code zu verschlüsseln, müssen darum nur die
Bits nach dem zweiten Schlüssel k permutiert werden und
dann die selektive Inversion unter Verwendung des ersten
Schlüssels k' durchgeführt werden. Im Beispiel der Fig. 5
mit einem 16 bit Befehlscode hat der erste Schlüssel k'
16 bits, während der zweite Schlüssel k 64 bits aufweist.
Die Summe ist dann 80 bits. Die Gesamtanzahl der möglichen
Decoderschaltungen, die verschiedene Schlüssel verwenden,
ist darum:
$2^{16}$ x (16!)  1.4 x $10^{18}$.

Wenn der Mikroprozessor ein 8 bit Mikroprozessor ist mit
einem Datenbus von 8 bit, dann hat die Decoderschaltung nur
8 Eingangs- und Ausgangsleitungen. In diesem Falle erfordert
der erste Schlüssel k' nur 8 bits, während der zweite
Schlüssel k 32 bits enthält. Die Gesamtanzahl der bits ist
dann 40. Die Zahl der möglichen 8 bit Decoderschaltungen,
die verschiedene Schlüssel verwenden, ist dann:
$2^{8}$ x (8!)  1 x $10^{7}$.

Im Mikroprozessor können die Schlüsselregister mit den
Entschlüsselungsschlüsseln durch den Hersteller eingestellt werden. Jedoch ist es auch möglich, die Schlüssel
mit Hilfe von besonderen Befehlen zu programmieren. Dabei
muß beachtet werden, daß die Schlüsselregister nur beschrieben werden können, aber nicht ausgelesen werden können. Die
Schlüssel bleiben in den Registern, auch wenn ein Rücksetzbefehl von dem Mikroprozessor ausgeführt wird.

Der Mikroprozessor hat weiterhin ein Paar von Befehlen, um
die Decoderschaltung entweder in die Entschlüsselungsbetriebsart oder in die Nichtentschlüsselungsbetriebsart zu
versetzen. Normalerweise, wenn ein Rücksetzbefehl ausgeführt wird, ist die Decoderschaltung in der Nichtentschlüsselungsbetriebsart. Der Mikroprozessor beginnt mit der Ausführung von urgeladenen Codes und nachfolgenden Codes in der Nichtentschlüsselungsbetriebsart. Die urgeladenen
Codes müssen deshalb unverschlüsselte Codes sein.

Wenn nach der Ausführung der urgeladenen Codes geschützte
Software zu bearbeiten ist, dann folgt der Mikroprozessor
folgenden Regeln:

1. Der erste Befehl der geschützten Software ist ein "Setzen
   Verschlüsselungsbetriebsart" Befehl, in einem unverschlüsselten Code.

2. Der zweite Befehl der geschützten Software ist ein "JMP"
   Befehl, der sich ebenfalls in einem unverschlüsselten
   Code befindet. Der Zweck dieses Befehls besteht darin,
   die Codeschlange zu veranlassen, daß die folgenden Codes
   durch die Decoderschaltung hindurchgehen.

3. Die verschlüsselten Codes der geschützten Software folgen unmittelbar dem JMP Befehl.

4. Der letzte Befehl der geschützten Software ist ein
   "Nichtverschlüsselungsbetriebsart" Befehl. Dieser Befehl
   veranlaßt den Mikroprozessor in seine normale Betriebsart
   überzugehen.

Die Folge der Befehle für eine geschützte Software, die
innerhalb einer ungeschützten Software eingebettet ist,
sieht folgendermaßen aus:-

|  | | |
|---|---|---|
| | Setze Entschlüsselungs-<br>betriebsart<br>JMP A | Im unverschlüsselten<br>Code |
| A: | Programm<br>Setze Nichtverschlüsse-<br>lungsbetriebsart | Im verschlüsselten<br>Code |
| | Programm | Im unverschlüsselten<br>Code |

Die Anzahl der Bytes, die für die ersten beiden nichtverschlüsselten Befehle aufgewendet werden müssen, muß geringer sein als der Umfang der Codewarteschlange.

0155399

Patentansprüche

1. Schutzanordnung zur Verhinderung der unerlaubten Ausführung eines Programms auf einem als integrierter Schaltkreis realisierten Mikroprozessor, der Befehle in einem digitalen Code ausführt, dadurch g e k e n n z e i c h - n e t , daß eine Funktionseinheit zur Ausführung der Befehle im Mikroprozessor vorgesehen ist, daß eine Warteschlangenschaltung (22) zur Speicherung der Codes der auszuführenden Befehle vorgesehen ist, die zur Übergabe der Codes der auszuführenden Befehle mit der Funktionseinheit verbunden ist und daß eine Decoderschaltung (18) zur Entschlüsselung von verschlüsselten Befehlscodes vorgesehen ist, die vor der Warteschlangenschaltung angeordnet ist.

2. Schutzschaltung nach Anspruch 1, dadurch g e - k e n n z e i c h n e t , daß die Decoderschaltung (18) programmierbar ist.

3. Schutzschaltung nach Anspruch 2 oder 3, dadurch g e - k e n n z e i c h n e t , daß der Befehlscode in einer nur dem Mikroprozessor verständlichen Weise verschlüsselt ist.

4. Schutzschaltung nach einem der vorhergehenden Ansprüche, dadurch g e k e n n z e i c h n e t , daß die Decoderschaltung (18) ein Register (28) enthält, in dem zumindest ein Schlüssel gespeichert ist und weiterhin eine Entschlüsselungseinheit (30) enthält, die mit dem Register (28) verbunden ist und die die verschlüsselten Befehlscodes entsprechend dem Schlüssel entschlüsselt.

5. Schutzschaltung nach Anspruch 4, dadurch g e k e n n z e i c h n e t , daß der Schlüssel im Schlüsselregister (28) nicht flüchtig gspeichert ist.

6. Schutzschaltung nach Anspruch 5, dadurch  g e - k e n n z e i c h n e t  , daß das Schlüsselregister (28) programmierbar ist, um einen gespeicherten Schlüssel ändern zu können.

7. Schutzschaltung nach einem der Ansprüche 4 bis 6, dadurch  g e k e n n z e i c h n e t  , daß die Decoderschaltung (18) neben der Entschlüsselungseinheit (30) eine Umgehungsschaltung (34, 32, 36) enthält, die so aufgebaut ist, daß verschlüsselte Befehle durch die Entschlüsselungseinheit (30) und nichtverschlüsselte Befehle um die Entschlüsselungseinheit herumgeführt werden.

8. Schutzschaltung nach Anspruch 7, dadurch  g e k e n n - z e i c h n e t  , daß die Umgehungsschaltung einen Schalter (34) enthält, der in Abhängigkeit eines bestimmten Befehlscodes folgende Befehle zur Entschlüsselungseinheit (30) leitet oder um diese herumleitet.

9. Schutzschaltung nach einem der Ansprüche 4 bis 8, dadurch  g e k e n n z e i c h n e t  , daß die Entschlüsselungseinheit (30) eine selektive Invertierungsstufe (38) enthält, die ausgewählte Ziffern des Befehlscodes gemäß einem Schlüssel invertiert, der in einem Schlüsselregister (40) gespeichert ist.

10. Schutzschaltung nach Anspruch 9, dadurch  g e - k e n n z e i c h n e t  , daß die Entschlüsselungsstufe (30) eine Permutationsschaltung (42) enthält, die die Folge der Ziffern des Befehlscodes in Abhängigkeit eines zweiten in einem zweiten Schlüsselregister (44) gespeicherten Schlüssels permutiert.

FIG. 1

1/3

0155399

ADDRESS UNIT

ADDER — BASES

COMP. — LIMITS

EA ADDER

STATE MACHINE

16

ADDRESS DRIVERS → ADDRESS

STATE MACHINE ← CONTROL

PREFETCHER

MATH COPROCESSOR DATA CHANNEL

DECODER —18

CODE QUEUE —22

→ DATA

BUS

20

BUS UNIT

10

26    24

EXECUTION UNIT

REGISTERS

ALU    CROM

MUL / DIV MACHINE

14

INSTRUCTION QUEUE

TRANSLATOR

STATE MACHINE

INSTRUCTION UNIT

12

FROM EXTERAL DATA BUS 20

SCRAMBLED CODE

26

DECODER 18

28

KEY REGISTER

UNSCRAMBLED CODE

CODE QUEUE 22

TRANSLATOR IN INSTRUCTION UNIT

24

FIG. 2

SCRAMBLED OR UNSCRAMBLED CODE

32

18

SW 34

DE- CI- PHER

30

SW 36

CODE QUEUE 22

TRANSLATOR IN INSTRUCTION UNIT

FIG. 3

SCRAMBLED CODE

SELECTIVE INVERSION 38

PERMUTA- TION BOX 42

UNSCRAMBLED CODE

40

K' KEY REGISTER

44

K KEY REGISTER

FIG. 4

INPUT

$b_0$

$b_{15}$

SELECTIVE INVERSION

38

PERMUTATION BOX
42

OUTPUT

FIG. 5